# EUROPÄISCHE PATENTSCHRIFT

(11) **EP 1 204 193 B1**
(45) Veröffentlichungstag und Bekanntmachung des Hinweises auf die Patenterteilung: **16.04.2008**
(21) Anmeldenummer: 01125941.3
(22) Anmeldetag: 31.10.2001
(51) Int. Cl.: H02K 9/16

(54) **Kühlsystem für trägheitsarme rotierende elektrische Maschine**
Cooling system for a low inertia rotating electric machine
Système de refroidissement d'une machine électrique tournante à faible inertie

(30) Priorität: 02.11.2000 DE 10054338
(43) Veröffentlichungstag der Anmeldung: 08.05.2002
(73) Patentinhaber: Antriebstechnik Katt Hessen GmbH, 34576 Homberg/Efze (DE)
(72) Erfinder: Eberhardt, Heinz Dieter, Prof. Dr.-Ing., 01239 Dresden (DE)
(74) Vertreter: Weissfloh, Ingo

(56) Entgegenhaltungen:
- EP-A- 1 322 023
- DE-A- 3 321 444
- DE-C- 737 104
- DE-C- 841 774
- US-A- 4 163 163
- US-A- 4 528 469
- US-A- 5 633 543
- PATENT ABSTRACTS OF JAPAN vol. 009, no. 031 (E-295), 9. Februar 1985 (1985-02-09) -& JP 59 175353 A (YASUKAWA DENKI SEISAKUSHO KK), 4. Oktober 1984 (1984-10-04)
- SEM CONTROLLED MOTOR TECHNOLOGY: "Trägheitsarme Drehstrom Kompaktservomotoren" SERIE HDM AUSGABE D5, März 2006 (2006-03),
- SIEMENS AG: "Drehstrom-Dynamometer" KURZBESCHREIBUNG, 2003,
- MHANGO L.M.C: "DESIGN IDEAS FOR LOW-INERTIA ELECTRONICALLY COMMUTATED PM MOTORS FOR SPECIAL APPLICATIONS" IEE COLLOQUIUM ON VARIABLE SPEED DRIVES AND MOTION CONTROL, 4. November 1992 (1992-11-04), Seiten 9/1-9/5,

## Beschreibung

Die Erfindung betrifft eine elektrische trägheitsarme rotierende Maschinen mit eines Kühlsystem, insbesondere für Drehstrommaschinen mit Fremd- oder Eigenkühlung.

Hochdynamische Antriebe benötigen trägheitsarme Elektromotoren. Trägheitsarme rotierende elektrische Maschinen erfordern einen Läufer mit möglichst geringen Durchmesser. Die Realisierung einer solchen Maschinenausführung bedingt insbesondere eine intensive Kühlung des Läufers.

Eine intensive Luftkühlung des Läufers kann mit Hilfe von axialen Kühlkanälen oder auch mit axialen und radialen Kühlkanälen erreicht werden. Dabei sind die Ständer- und Läuferblechpakete aus Teilblechpaketen aufgebaut. Luftgekühlte Ausführungen sind in EP 0 522 210 A1, EP 0.118 802 A1 und DE 43 20 559 A1 dargestellt. Diese Ausführungen haben den Nachteil, dass die axialen Kühlkanäle innerhalb des Läufers axiale Strömungsquerschnitte benötigen, die einer Verkleinerung des Läuferdurchmessers entgegenstehen.

In der DE 3808 986 C2 wird eine Asynchronmaschine mit Luftkühlung beschrieben wo sowohl das Ständer als auch das Läuferblechpaket aus einzelnen Teilblechpaketen aufgebaut ist. Durch die axialen Kühlkanäle im Inneren des Läufers wird der maximal erreichbaren kleinste Durchmesser des Läufers begrenzt. Zudem kommt es in der Maschine bei dieser Kühlungsausführung zu einer ungleichmäßiger Temperaturverteilung.

Eine weitere Lösung für eine intensive Kühlung des Läufers besteht in der Anwendung der Flüssigkeitskühlung entsprechend EP 0 824 287 A1. Diese Lösung ist sehr aufwendig und kostenintensiv, weil komplizierte Dichtungselemente für die Realisierung der Flüssigkeitskühlung im rotierenden Läufer eingesetzt werden müssen. Zudem ist jede Flüssigkeitskühlung konstruktiv aufwendiger und kostenintensiver als eine Luftkühlung.

In einer anderen Schrift, der DE 198 24 202 C1, wird eine weitere aus Teilblechpaketen im Ständer und Läufer bestehende Maschine mit Flüssigkeitskühlung vorgeschlagen. Der wesentlichste Nachteil dieser Lösung ist allerdings darin zusehen, dass diese Kühlungsart nur in der konventionellen Einbaulage geeignet ist ihre Wirkung zu entfalten. Zudem führt diese vorgeschlagene Lösung zu einer ungleichmäßigen Kühlung über den Umfang des Blechpaketes betrachtet. Problematisch ist insbesondere die Kühlung des sich drehenden Läufers, da die Flüssigkeit durch die Zentrifugalwirkung nach außen geschleudert wird. Zudem ist die hier beschriebene Ölkühlung weiter trägheitserhöhend.

Die Anwendung eines zentrifugalen Wärmerohrs zur Läuferkühlung entsprechend DE 39 09 253 A1 erlaubt eine intensive Kühlung des Läufers. Der Nachteil dieser Lösung besteht darin, dass die Kühlkörper mitrotieren und damit einer wesentlichen Verkleinerung des Trägheitsmomentes entgegenstehen. Außerdem ist diese Lösung konstruktiv aufwendig und kostenintensiv und das Langzeitverhalten ist nicht ausreichend abgesichert.

In den Patent Abstracts of Japan vol. 009, no. 031 (E-295), vom 9. Februar 1985 & JP 59-175353A (YASUKAWA DENKI SEISAKUSHO KK) ist eine elektrische Maschine beschrieben, die entlang der Läuferwelle zusätzliche axiale Kühlkanäle besitzt um die Kühlung des Läufers dieser Maschine weiter zu verbessern. Allerdings bedingen diese zusätzlichen axialen Kühlkanäle eine Durchmesservergrößerung des Läufers was zu einer erhöhten Trägheit des Läufers insgesamt führt.

In der DE 841 774 C (Brown Boveri &CIE) vom 6. Juli 1943 ist eine elektrische Maschine beschrieben, deren Läufer aus Teilblechpaketen besteht. Eine gleichmäßige Kühlluftführung in der Maschine ist auf grund ihrer Konstruktion nur bedingt möglich Bei dieser Ausführung kommt es innerhalb der Maschine radial verteilt zu unterschiedlichen Temperaturverläufen. Eine Kühlung des Läufers bzw. der Läuferwelle erfolgt vorrangig nur an seiner Oberfläche. Eine intensive Kühlung vor allem des Läufers bei hohen Drehzahlen ist nicht möglich.

Der Erfindung liegt die Aufgabe zugrunde, eine trägheitsarme rotierende elektrische Maschinen mit einem hoch intensiven Kühlsystem, insbesondere für Drehstrommaschinen mit Fremd- und Eigenkühlung zu schaffen. Dabei soll die kostengünstige Luftkühlung angewendet werden. Die Temperaturunterschiede in den Ständer- und Läuferleitern sollen möglichst gering sein.

Die Aufgabe der Erfindung wird durch die Merkmale des 1.Patentanspruchs gelöst. Anspruch 1 beschreibt die allgemeine erfinderische Lösung. Dabei besteht das Läufer- 6 und Ständerblechpaket 1 jeweils aus mehren Teilblechpaketen. An der Außenkontur des Ständerblechpaketes 1 schließen sich nach außen über die gesamte Länge axial einseitig verschlossene Zu- 2 und Abströmkammern 3 über den Umfang verteilt mit etwa gleichem axialen Querschnitt an. Von der Zuströmkammer 2 führen radiale Kühlkanäle, die durch die Endbleche der Ständerteilblechpakete 5 axial und durch Leiteinrichtungs- und Abstandshaltesegmente 4 im Rückengebiet des Ständerblechpaketes 1 radial begrenzt sind. Im Nutgebiet des Ständerblechpaketes 1 stellt die Wicklung mit der Nutisolation die radiale Begrenzung dar. Zwischen den Läuferteilblechpaketen 14 sind Abstandselemente 7 angeordnet.

Durch die erfindungsgemäße Ausbildung der Zuströmkammern 2 wird über die gesamte Länge des Ständerblechpaketes 1 kalte Kühlluft zugeführt. Die axiale Strömung in den Zuströmkammern 2 wird in die radialen Kühlkanäle des Ständerblechpaketes 1 umgelenkt und strömt radial durch das Ständerblechpaket 1 hindurch. Die Kühlkanäle im Rücken des Standerblechpaketes 1 werden durch die Leiteinrichtungs- und Abstandshaltersegmente 4 und die Endbleche der Ständerteilblechpakete 5 gebildet. Im Nutbereich des Ständerblechpaketes 1 werden die radialen Kühlkanäle durch die Nutisolation und die Endbleche der Ständerteilblechpakete 5 begrenzt. Dabei sind die Leiteinrichtungs- und Abstandshaltersegmente 4 so dimensioniert, dass sie direkt auf der Nutisolation im Nutgrund aufsitzen. Durch die erfindungsgemäße Ausbildung strömt die Kühlluft mit erhöhter Geschwindigkeit als Strahl in die radialen Kühlkanäle des Läuferblechpaketes 6. Das Läuferblechpaket 6 setzt sich wiederum aus einzelnen Läuferteilblechpaketen 14 zusammen. Die Länge der Läuferteilblechpakete 14 ist dabei auf die Länge der Ständerteilblechpakete 5 abgestimmt, so dass sich beide radialen Kühlkanäle in einer Ebene befinden. Zwischen den einzelnen Läuferteilblechpaketen 14 sind Abstandselement 7 angeordnet. Die in die radialen Kühlkanäle eingeströmte Kühlluft kühlt die in den radialen Kühlkanälen des Läuferblechpaketes 6 freiliegenden Leiter 13 direkt. Des weiteren werden die Endbleche der Läuferteilblechpakete 14 direkt gekühlt. Die Luft wird durch die Rotation zusätzlich verwirbelt, so dass eine intensive Kühlung erreicht wird. Nach dem Durchströmen der Läuferkühlkanäle wird die erwärmte Luft in die radialen Kühlkanäle des Ständerblechpaketes 1 gedrückt. Diese Kühlkanäle sind in gleicher Art und Weise wie die Kühlkanäle, durch die, die Luft einströmt, ausgebildet und sind mit den Abströmkammern 3 verbunden. Dabei kühlt diese Luft das Ständerblechpaket 1. In den Abströmkammern 3 wird sie umgelenkt und strömt durch Öffnungen im Pressrahmen 9 aus der rotierenden elektrischen Maschine.

In einer bevorzugten Ausführungsform sind beim erfindungsgemäßen Kühlsystem für trägheitsarme rotierende elektrische Maschinen jeweils eine Zuströmkammer 2oder mehrere Zuströmkammer 2 nebeneinander in Umfangsrichtung und anschließend eine Abströmkammer 3 oder mehrere Abströmkammern 3 nebeneinander in Umfangsrichtung angeordnet. So ist der gesamte Ständer zum Beispiel geviertelt ausführbar, wobei ein Viertel mit Zuströmkammern 2 und das nächste Viertel mit Abströmkammern 3, das nächste wieder mit Zuströmkammern 2 und das letzte erneut mit Abströmkammern 3 versehen ist.

Vorteilhafterweise sind die Abstandselemente 7 zwischen den Läuferteilblechpaketen 14 so ausgebildet, dass sie sich bis zur Läuferwelle 8 erstrecken.

Auch eine Anordnung des erfindungsgemäßen Kühlsystems für trägheitsarme rotierende elektrische Maschinen bei dem die Zu- 2 und Abströmkammern 3 in einem Gehäuse angeordnet sind, kann ausgeführt werden.

In einer bevorzugten Bauweise sind die Zu- 2 und Abströmkammern 3 im Ständerblechpaket 1 einer gehäuselosen Maschine ausgebildet, wobei das Ständerblechpaket 1 durch Pressrahmen 9 seitlich abgeschlossen ist.

Um auch die Wickelköpfe 11 mit dem Kühlsystem kühlen zu können, erstrecken sich die Zu- 2 und Abströmkammern 3 über die Blechpaketlänge hinaus bis zum Ende der Pressrahmen 9. In den Kammerberandungen in Richtung der Wicklungsköpfe 11 sind zusätzlich radiale Öffnungen 10 angeordnet. Diese radialen Öffnungen 10 im Pressrahmen 9 in Richtung der Wicklungsköpfe 11 befinden sich auf der verschlossenen Seite der Zu- 2 und Abströmkammern 3.

Aus fertigungstechnischen Gründen ist es vorteilhaft, dass die Leiteinrichtungs- und Abstandshaltersegmente 4 und die Berandung der Zu- 2 und Abströmkammern 3 in den Zwischenräumen zwischen den Teilblechpaketen aus ein oder mehreren gestanzten und hintereinander gesetzten gleichartigen Distanzblechen bestehen.

Vorteilhafte Wirkungen erreicht das Kühlsystem für trägheitsarme rotierende elektrische Maschinen auch dann, wenn die Leiter 13, die im Läuferblechpaket 6 eingebracht sind, gegossen sind oder als Einfach- oder Doppelkäfig mit Rundstäben oder mit isolierten Drähten ausgeführt sind und dass im Fall des Doppelkäfigs ein radialer Abstand zwischen den doppelt angeordneten Leitern besteht. Bei gegossenem Kurzschlussring der Läuferwicklung können zusätzlich Wirbler ausgeführt sein. Besteht der Kurzschlussring aus ringförmigen flachen Elementen, so ist ein geringer axialer Abstand von ca. 1mm zwischen diesen Elementen auszuführen.

Vorzugsweise ist beim erfindungsgemäßen Kühlsystem für trägheitsarme rotierende elektrische Maschinen es so, dass die Fremdkühlung durch einen Lüfterbaustein erfolgt, der axial oder radial seitlich oder oben angeordnet ist.

Insbesondere ist es von Vorteil, wenn die Leiteinrichtungs- und Abstandshaltersegmente 4 im Raum zwischen den Ständerteilblechpaketen 5 im Rückengebiet des Ständerblechpaketes 1 so ausgeführt sind, dass sich ihr radialer Querschnitt nach innen verkleinert. Weiterhin verbessert sich die Wirksamkeit des Kühlsystem für trägheitsarme rotierende elektrische Maschinen, wenn im Bereich des Kopfes der Ständernuten zusätzliche düsenförmige Leitelemente für die radialen Kühlkanäle, die mit den Zuströmkammern 2 verbunden sind, ausgebildet sind. Auch eine Ausbildung von trichterförmigen Leitelementen im Bereich des Kopfes der Ständernuten für die radialen Kühlkanäle, die mit den Ausströmkammern 3 verbunden sind, bringt kühlungstechnische Vorteile. Beide Leitelemente sind vorteilhafterweise so angeordnet, dass sie den Kühlluftstrom gegen die Drehrichtung des Läufers führen.

Um den Wärmeübergang zwischen der Ständer- und Läuferwicklung im Nutbereich und den Teilblechpaketen zu erhöhen und die mechanischen Festigkeit der gesamten trägheitsarmen rotierenden elektrischen Maschine zu verbessern, sind vorteilhafterweise gut wärmeleitende Vergussmassen eingebracht. Bei der Verwendung von blanken Leitern 13 im Läufer ist eine metallische Verbindung zwischen den Leitern 13 und den Läuferteilblechpaketen 5 von Vorteil. Die Breite der radialen Kühlkanäle im Läuferblechpaket 6 kann auch wahlweise kleiner oder größer sein als die Breite der radialen Kühlkanäle des Ständerblechpaketes 1.

In einer anderen speziellen Variante ist der axiale Querschnitt der Zu- 2 und Abströmkammern 3 unterschiedlich ausgebildet.

Das erfindungsgemäße Kühlsystem für trägheitsarme rotierende elektrische Maschinen kann für besondere Anwendungsfälle auch mit mehreren Lüftern ausgebildet sein, wobei z. B. an den Zuströmkammern 2 axial beidseitig Lüfter angeordnet sind und die Abströmkammern 3 dann axial verschlossen sind und radiale Abströmöffnungen an der vom Ständerblechpaket 1 abgewandten Seite aufweisen. Auch die Anordnung eines zusätzlichen saugenden Lüfters an den Abströmkammern 3 bei drückender Belüftung als zweiter Lüfter ist möglich.

Die Anordnung von zusätzlichen radiale Abströmöffnungen aus den Abströmkammern 3 im Mantel der trägheitsarmen rotierenden elektrischen Maschine an der vom Ständerblechpaket 1 abgewandten Seite hin ist, um die Kühlung zu verbessern, ausführbar.

In einer besonderen Ausführung sind die Zu- 2 und Abströmkammern 3 und die zugehörigen Leiteinrichtungs- und Abstandshaltersegmente 4 so ausgebildet, dass sich jeweils ein entstandener radialer Kühlkanal über mehrere Nutteilungen der trägheitsarmen rotierenden elektrischen Maschine erstreckt (z. B. über 2, 3, oder 4 Nutteilungen).

Bei einer weiteren speziellen Ausführung unterscheiden sich die Zuströmkammern 2 und die Abströmkammern 3 im Querschnitt und die zugehörigen Leiteinrichtungs- und Abstandshaltersegmente 4 sind so ausgebildet, dass sich die radialen Kühlkanäle, durch die die Luft zuströmt, über eine andere Zahl von mehreren Nutteilungen erstrecken als die radialen Kühlkanäle durch die Luft abströmt.

Das erfindungsgemäße Kühlsystem für trägheitsarme rotierende elektrische Maschinen kann auch so qualifiziert werden, dass die Zu- 2 und Abströmkanäle 3 mit einem zusätzlichen außen angeordneten Wärmetauscher verbunden sind. Dadurch wird ein geschlossener innerer Kühlkreislauf realisierbar.

Bei speziellen Anwendungsfällen sind, um den Kühlluftdurchsatz im Läufer zu erhöhen, in den radialen Kühlkanälen des Läuferblechpaketes (6) zusätzliche druckfördernde Leit- und Abstandselemente angeordnet.

Die Erfindung soll nachstehend an Hand der Figuren 1-3 in einem Ausführungsbeispiel näher erläutert werden. Dabei zeigt
- Fig. 1: einen Teilschnitt im Bereich der radialen Kühlkanäle bei einer gehäuselosen Ausführung,
- Fig. 2: einen Längsschnitt in einer Ebene mit einer Zuströmkammer 2 und
- Fig. 3: einen Längsschnitt in einer Ebene mit einer Abströmkammer 3.

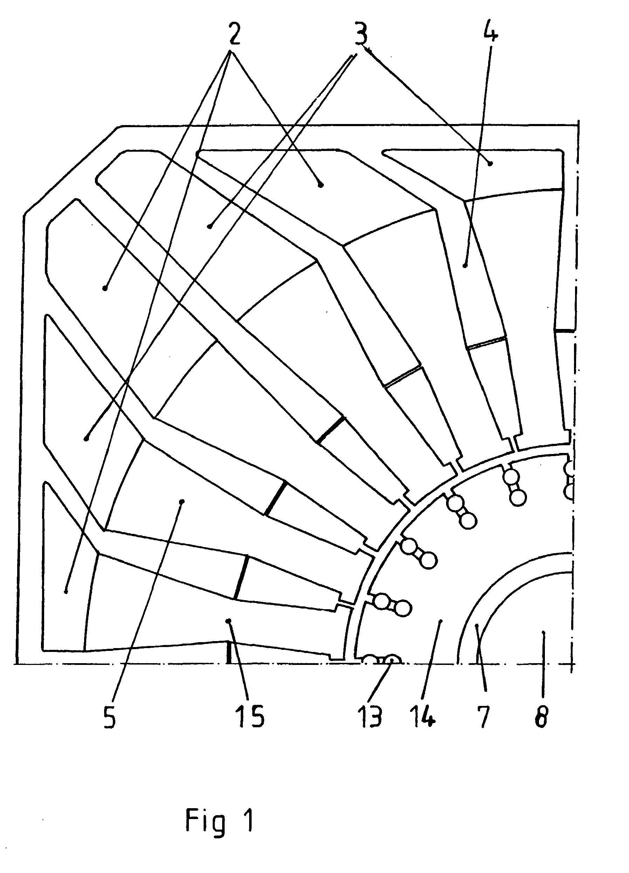

Eine erfindungsgemäße trägheitsarme rotierende elektrische Maschine besitzt ein Kühlsystem, bei dem die Kühlluft axial zugeführt wird, dann die radialen Kühlkanäle zwischen den Ständerteilblechpaketen 5 und den Läuferteilblechpaketen 14 nach Innen bis nahezu zur Läuferwelle 8 durchströmt. Dabei werden insbesondere auch die Leiter 13 der Läuferwicklung umströmt. Die Kühlluft wird nunmehr wieder radial nach außen in die Abströmkammern 3 geführt und verlässt die Maschine axial. Dabei wechseln sich, wie aus Fig. 1 ersichtlich, im Bereich der Zu- 2 und Abströmkammern 3 außerhalb des magnetisch aktiven Rückens des Ständerblechpaketes 1 einer gehäuselosen Maschine in Umfangrichtung betrachtet, die Zu- 2 und die Abströmkammern 3 ab. Die trägheitsarme rotierende elektrische Maschine besteht aus einer Reihe von einzelnen Teilblechpaketen. Die Länge der Ständerteilblechpakete 5 und Läuferteilblechpakete 14 ist so ausgeführt, dass jeweils ein radialer Kühlkanal des Ständers einem radialen Kühlkanal des Läufers gegenübersteht. Zwischen den Ständerteilblechpaketen 6 ist ein Leiteinrichtungs- und Abstandhaltersegment 4 angeordnet. Vorzugsweise ist dieses Leiteinrichtungs- und Abstandshaltesegment 4 aus den gleichen gestanzten Ständerblechen, (sogenannten Distanzblechen) durch heraus trennen der Zahnsegmente 15 hergestellt.

Der Ständer der erfindungsgemäßen trägheitsarmen rotierende elektrischen Maschine wird durch Pressrahmen 9 begrenzt und zusammengehalten. Die Pressrahmen 9 sind dabei so ausgebildet, dass auf einer Seite alle Abströmkammern 3 und auf der anderen Seite alle Zuströmkammern 2 axial verschlossen sind.

Zwischen den Läuferteilblechpaketen 14 sind Abstandselemente 7 angeordnet. Diese reichen direkt bis auf die Läuferwelle 8. Dabei sind die Abstandselemente 7 so ausgebildet, dass die Kühlluft sowohl die Leiter 13 umspült und kühlt, als auch die Wärme aus den Läuferteilblechpaketen 14 des Läuferblechpaketes 6 abführt, da die Kühlluft die Oberflächen der jeweils außen liegenden Bleche der Läuferteilblechpakete 14 überströmt.

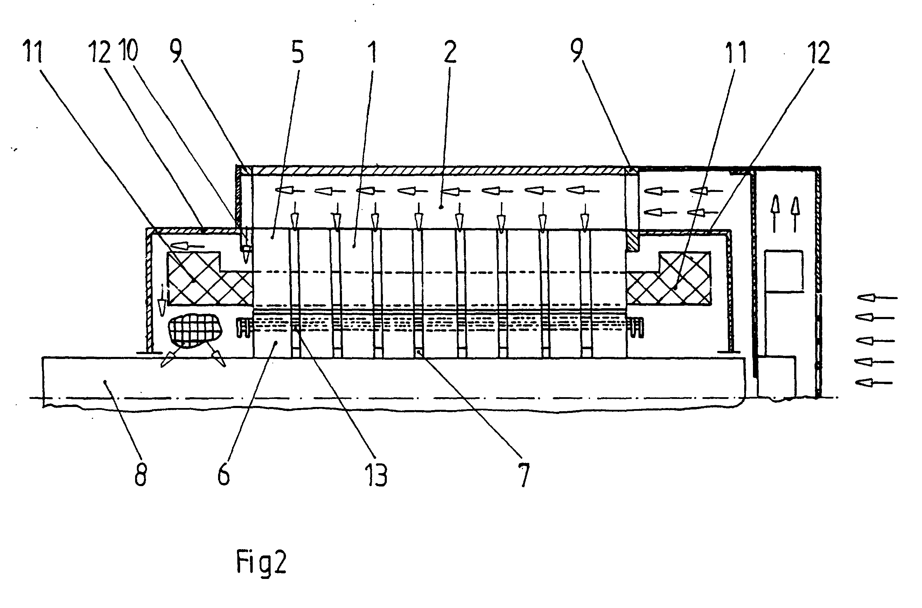

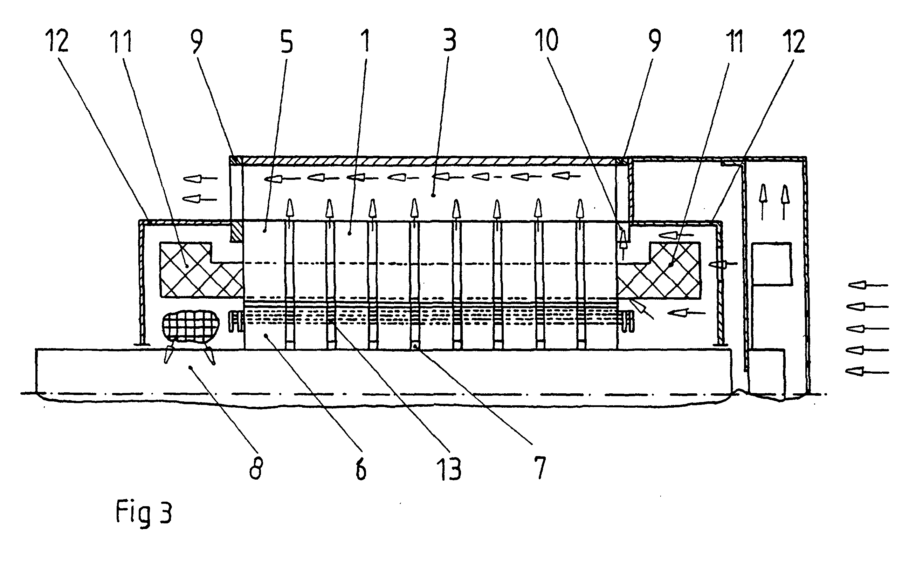

In den Fig. 2 und 3 ist eine erfindungsgemäße Ausführung mit drückender Belüftung und axial angeordneten Lüfterbaustein beschrieben. Figur 1 zeigt dabei wie die Kühlluft auf der Lüfterseite axial in den Wicklungskopfraum eintritt, die Wicklungsköpfe 11 der Ständer- und Läuferwicklung kühlt und dann durch speziell angeordnete radiale Öffnungen 10 des Pressrahmens 9 in die Abströmkammern 3 strömt. Die dem Lüfter entgegengesetzten

Wicklungsköpfe 11 werden über speziell angeordnete radiale Öffnungen 10, die mit den Zuströmkammern 2 verbunden sind, gekühlt. Im Lagerschild 12 auf der vom Lüfter abgewandten Seite befinden sich Ausströmgitter, durch die die Kühlluft, die die Wicklungsköpfe 11 gekühlt hat, die erfindungsgemäße Maschine verlässt. Anstelle einer drückenden Belüftung kann die erfindungsgemäße trägheitsarme rotierende elektrische Maschine auch in saugender Belüftung ausgeführt werden.

Die erfindungsgemäße Lösung lässt sich ohne große Änderungen auch für andere elektrische Maschinen insbesondere für Synchronmaschinen z.B. mit Permanentmagneten im Läufer anwenden.

### Bezugszeichenliste

- 1: Ständerblechpaket
- 2: Zuströmkammer
- 3: Abströmkammer
- 4: Leiteinrichtungs- und Abstandshaltersegment
- 5: Ständerteilblechpaket
- 6: Läuferblechpaket
- 7: Abstandselement
- 8: Läuferwelle
- 9: Pressrahmen
- 10: Radiale Öffnungen
- 11: Wicklungskopf
- 12: Lagerschild
- 13: Leiter
- 14: Läuferteilblechpaket
- 15: Zahnsegment

## Patentansprüche

1. Elektrische trägheitsarme rotierende Maschine mit einem Kühlsystem mit Fremd- oder Eigenkühlung, insbesondere für Drehstrommaschinen mit einem Ständer- und Läuferblechpaket bestehend aus Teilblechpaketen, wobei am Außendurchmesser des Ständerblechpaketes (1) über seine gesamte Länge axial einseitig verschlossene Zu- (2) und Abströmkammern (3) über den Umfang wechselnd verteilt sind und mit gleichem oder ungleichem axialen Querschnitt angeordneten sind,
wobei im Bereich des Rückens des Ständerblechpaketes (1) zwischen den Ständerblechteilblechpaketen (5) in radialer Richtung Leiteinrichtungs- und Abstandshaltersegmente (4) entsprechend der Anzahl der Zu- (2) und Abströmkammern (3) ausgebildet sind und zwischen den Läuferteilblechpaketen (14) Abstandselemente (7) angeordnet sind,
wobei der Ständer und der Läufer radiale Kühlkanäle zwischen den Ständerteilblechpaketen (5) und den Läuferteilblechpaketen (14) aufweisen,
wobei die Kühlkanäle des Ständerblechpaketes (1) durch die Leiteinrichtungs- und Abstandshalteressegmente (4) und die Endbleche der Ständerteilblechpakete (5) gebildet werden,
wobei die Länge der Ständerteilblechpakete (5) und der Läuferteilblechpakete (14) so ausgeführt ist, dass jeweils ein radialer Kühlkanal des Ständers einem radialen Kühlkanal des Läufers gegenübersteht,
dass die Kühlluft die radialen Kühlkanäle zwischen den Ständerblechpaketen (1) und den Läuferblechpaketen (6) nach innen bis nahezu zur Läuferwelle (8) durchströmt,
so dass die axiale Strömung aus den Zuströmkammern (2) in die Abströmkammern (3) der radialen Kühlkanäle des Ständerblechpaketes (1) umgelenkt wird und radial durch das Ständerblechpaket (1) hindurchströmt,
und das die Kühlluft wieder radial nach außen durch die Ständerkühlkanäle in die Abströmkammern (3) geführt wird und die Maschine axial verlässt.

2. Elektrische trägheitsarme rotierende Maschinen mit einem Kühlsystem nach Anspruch 1, wobei jeweils eine Zuströmkammer (2) oder mehrere Zuströmkammern (2) nebeneinander in Umfangsrichtung und anschließend eine Abströmkammer (3) oder mehrere Abströmkammern (3) nebeneinander in Umfangsrichtung angeordnet sind.

3. Elektrische trägheitsarme rotierende Maschinen mit einem Kühlsystem nach Anspruch 1 und 2, wobei die Abstandselemente (7) zwischen den Läuferteilblechpaketen (14) sich bis zur Läuferwelle (8) erstrecken.

4. Elektrische trägheitsarme rotierende Maschinen mit einem Kühlsystem nach Anspruch 1 bis 3, wobei die Zu- (2) und Abströmkammern (3) in einem Gehäuse angeordnet sind.

5. Elektrische trägheitsarme rotierende Maschinen mit einem Kühlsystem nach Anspruch 1 und 2, wobei die Zu- (2) und Abströmkammern (3) im Ständerblechpaket (1) einer gehäuselosen Maschine ausgebildet sind und dass das Ständerblechpaket (1) durch Pressrahmen (9) seitlich abgeschlossen ist.

6. Elektrische trägheitsarme rotierende Maschinen mit einem Kühlsystem nach Anspruch 5, wobei die Zu-(2) und Abströmkammern (3) über die Blechpaketlänge hinaus bis zum Ende der Pressrahmen (9) ausgebildet sind und sich radiale Öffnungen (10) in den Kammerberandungen in Richtung der Wicklungsköpfe (11) befinden.

7. Elektrische trägheitsarme rotierende Maschinen mit einem Kühlsystem nach Anspruch 5 und 6, wobei sich die radialen Öffnungen (10) im Pressrahmen (9) in Richtung der Wicklungsköpfe (11) auf der verschlossenen Seite der Zu- (2) und Abströmkammern (3) befinden.

8. Elektrische trägheitsarme rotierende Maschinen mit einem Kühlsystem nach Anspruch 1, 2, 5, 6, und 7, wobei die Leiteinrichtungs- und Abstandshaltersegmente (4) und die Berandung der Zu- (2) und Abströmkammern (3) in den Zwischenräumen zwischen den Ständerteilblechpaketen (5) aus ein oder mehreren gestanzten Distanzblechen bestehen.

9. Elektrische trägheitsarme rotierende Maschinen mit einem Kühlsystem nach Anspruch 1, wobei die Leiter (13) des Läufers gegossen sind oder als Einfach- oder Doppelkäfig mit Rundstäben oder mit isolierten Drähten ausgeführt sind und im Fall des Doppelkäfigs ein radialer Abstand zwischen den doppelt angeordneten Leitern (13) besteht.

10. Elektrische trägheitsarme rotierende Maschinen mit einem Kühlsystem nach einem der vorherigen Ansprüche,
wobei die Fremdkühlung durch einen Lüfterbaustein erfolgt, der axial oder radial seitlich oder radial oben angeordnet ist.

11. Elektrische trägheitsarme rotierende Maschinen mit einem Kühlsystem nach Anspruch 1 und 9, wobei zur Eigenkühlung der gegossene Kurzschlussring der Läuferwicklung mit Wirbler ausgeführt ist.

12. Elektrische trägheitsarme rotierende Maschinen mit einem Kühlsystem nach Anspruch 1 und 9, wobei der Kurzschlussring der Läuferwicklung aus ringförmigen flachen Elementen ausgeführt ist und zwischen diesen ein geringer axialer Abstand von ca. 1 mm besteht.

13. Elektrische trägheitsarme rotierende Maschinen mit einem Kühlsystem nach Anspruch 1, 2 und 5 bis 8, wobei die Leiteinrichtungs- und Abstandshaltersegmente (4) im Raum zwischen den Ständerteilblechpaketen (5) im Rückengebiet des Ständerblechpaketes (1) so ausgeführt sind, dass sich der radiale Querschnitt nach innen verkleinert.

14. Elektrische trägheitsarme rotierende Maschinen mit einem Kühlsystem nach Anspruch 1, 2, 5 bis 8 und 13, wobei im Bereich des Kopfes der Ständernuten düsenförmige Leitelemente für die radialen Kühlkanäle , die mit den Zuströmkammern (2) verbunden sind, ausgebildet sind.

15. Elektrische trägheitsarme rotierende Maschinen mit einem Kühlsystem nach Anspruch 1, 2, 5 bis 8, und 13, wobei im Bereich des Kopfes der Ständernuten trichterförmige Leitelemente für die radialen Kühlkanäle, die mit den Ausströmkammern (3) verbunden sind, ausgebildet sind.

16. Elektrische trägheitsarme rotierende Maschinen mit einem Kühlsystem nach einem der vorherigen Ansprüche, wobei zwischen den Teilblechpaketen und der Ständer- und Läuferwicklung im Nutbereich gut wärmeleitende Vergussmassen eingebracht sind oder im Läuferblechpaket (6) bei Verwendung von blanken Leitern (13) eine metallische Verbindung zwischen den Leitern (13) und den Läuferteilblechpaketen (14) besteht.

17. Elektrische trägheitsarme rotierende Maschinen mit einem Kühlsystem nach einem der vorherigen Ansprüche, wobei die Breite der radialen Kühlkanäle im Läuferblechpaket (6) kleiner oder größer als die Breite der radialen Kühlkanäle des Ständerblechpaketes (1) ist.

18. Elektrische trägheitsarme rotierende Maschinen mit einem Kühlsystem nach Anspruch 1, 2, 4 bis 8, 13 bis 15 und 17, wobei der axiale Querschnitt der Zu- (2) und Abströmkammern (3) unterschiedlich ausgebildet ist.

19. Elektrische trägheitsarme rotierende Maschinen mit einem Kühlsystem nach Anspruch 1, 2, 4 bis 8, 13 bis 15, 17und 18, wobei an den Zuströmkammern (2) axial beidseitig Lüfter angeordnet sind und die Abströmkammern (3) axial verschlossen sind und radiale Abströmöffnungen in ihrem Mantel an der von dem Ständerblechpaket (1) abgewandten Seite aufweisen.

20. Elektrische trägheitsarme rotierende Maschinen mit einem Kühlsystem nach Anspruch 1, 2, 4 bis 8, 13 bis 15, 17 und 18, wobei bei drückender Belüftung an den Abströmkammern (3) ein zusätzlich saugender Lüfter angeordnet ist.

21. Elektrische trägheitsarme rotierende Maschinen mit einem Kühlsystem nach Anspruch 1, 2, 4 bis 8, 13 bis 15, 17 und 18, wobei die Abströmkammern (3) an der vom Ständerblechpaket (1) abgewandten Seite hin zusätzliche radiale Abströmöffnungen besitzen.

22. Elektrische trägheitsarme rotierende Maschinen mit einem Kühlsystem nach den Ansprüchen 1, 2, 4 bis 8, 17 bis 21, wobei die Zu- (2) und Abströmkammern (3) und die zugehörigen Leiteinrichtungs- und Abstandshaltersegmente (4) so ausgebildet sind, dass sich jeweils ein entstandener radialer Kühlkanal über mehrere Nutteilungen erstreckt.

23. Elektrische trägheitsarme rotierende Maschinen mit einem Kühlsystem nach Anspruch 1, 2, 4 bis 8, 13 bis 15, 17 bis 21, wobei sich die Zuströmkammern (2) und die Abströmkammern (3) im Querschnitt unterscheiden und die zugehörigen Leiteinrichtungs- und Abstandshaltersegmente (4) so ausgebildet sind, dass die radialen Kühlkanäle, durch die die Luft zuströmt sich über eine andere Zahl von mehreren Nutteilungen erstrecken, als die radialen Kühlkanäle, durch die Luft abströmt.

24. Elektrische trägheitsarme rotierende Maschinen mit einem Kühlsystem nach einem der vorherigen Ansprüche, wobei die Zu- (2) und Abströmkanäle (3) mit einem zusätzlichen außen angeordneten Wärmetauscher verbunden sind.

25. Elektrische trägheitsarme rotierende Maschinen mit einem Kühlsystem nach Anspruch 1,9,11 und 12, wobei in den radialen Kühlkanälen des Läuferblechpaketes (6) zusätzliche druckfördernde Leit- und Abstandselemente angeordnet sind.

## Claims

1. Low-inertia rotating electrical machine having a self-cooling or a separate cooling system, particularly for three-phase a.c. machines with a laminated stator and rotor core consisting of laminated core sections, wherein unilaterally closed inlet chambers (2) and outlet chambers (3) are alternately distributed at the outer diameter of the circumference over the entire axial length of the laminated stator core (1), the axial cross-section being equal or unequal,
in which guide segments and spacer segments (4), whose number corresponds to the number of inlet chambers (2) and outlet chambers (3), are arranged radially between the laminated stator core sections (5) at the outer diameter of the laminated stator core (1) between the laminated stator core sections (5) and wherein spacer elements (7) are arranged between the laminated rotor core sections (14),
in which the stator and the rotor are provided with radial cooling ducts between said laminated stator core sections (5) and laminated rotor core sections (14),
the cooling ducts of the laminated stator core (1) being formed by the guide and spacer segments (4) and the end laminations of the laminated stator core sections (5), in which the length of the laminated stator core sections (5) and of the laminated rotor core sections (14) is such that a radial cooling duct of the stator is located opposite each radial cooling duct of the rotor,
that the cooling air flows inwards through the radial cooling ducts between the laminated stator cores (1) and the laminated rotor cores (6) almost to the rotor shaft (8), so that the axial air flow from the inlet chambers (2) is diverted to the outlet chambers (3) of the radial cooling ducts of the laminated stator core (1) such that the air flows radially through the laminated stator core (1)
and so that the cooling air once again flows outwards in the radial direction through the stator cooling ducts to the outlet chambers (3), leaving the machine in the axial direction.

2. Low-inertia rotating electrical machines with a cooling system according to claim 1, wherein one inlet chamber (2) or several inlet chambers (2) are each arranged side by side in the direction of the circumference, followed by an outlet chamber (3) or several outlet chambers (3) arranged side by side in the direction of the circumference.

3. Low-inertia rotating electrical machines with a cooling system according to claims 1 and 2, in which the spacer elements (7) between the laminated rotor core sections (14) extend up to the rotor shaft (8).

4. Low-inertia rotating electrical machines with a cooling system according to claims 1 to 3, in which the inlet chambers (2) and outlet chambers (3) are arranged in a frame.

5. Low-inertia rotating electrical machines with a cooling system according to claims 1 and 2, in which the inlet chambers (2) and outlet chambers (3) are arranged in a laminated stator core (1) of a frameless machine and in which the laminated stator core (1) is laterally enclosed by clamping frames (9).

6. Low-inertia rotating electrical machines with a cooling system according to claim 5, wherein the inlet chambers (2) and outlet chambers (3) extend beyond the laminated core length up to the ends of the clamping frames (9), with radial openings (10) being provided in the chamber rims in the direction of the end windings (11).

7. Low-inertia rotating electrical machines with a cooling system according to claims 5 and 6, wherein the radial openings (10) are located in the clamping frame (9) on the closed side of the inlet chambers (2) and outlet chambers (3) in the direction of the end windings (11).

8. Low-inertia rotating electrical machines with a cooling system according to claims 1, 2, 5, 6 and 7, wherein the guide and spacer segments (4) and the rims of the inlet chambers (2) and outlet chambers (3) in the spaces between the laminated stator core sections (5) consist of several stamped spacer sheets.

9. Low-inertia rotating electrical machines with a cooling system according to claim 1, wherein the conductors (13) of the rotor are cast or designed in the form of a single or double squirrel cage with round bars or with insulated wires and, in the case of the double squirrel cage, there is a radial space between the double conductors (13).

10. Low-inertia rotating electrical machines with a cooling system according to one of the preceding claims, in which separate cooling is effected by a fan module mounted axially or radially on the side or radially on top.

11. Low-inertia rotating electrical machines with a cooling system according to claims 1 and 9, in which the cast end ring of the rotor winding with a swirler is used to provide self-cooling.

12. Low-inertia rotating electrical machines with a cooling system according to claims 1 and 9, in which the end ring of the rotor winding consists of ring-shaped, flat elements axially spaced approx. 1 mm apart.

13. Low-inertia rotating electrical machines with a cooling system according to claims 1, 2 and 5 to 8, wherein the guide and spacer segments (4) located in the spaces between the laminated stator core sections (5) in the outside diameter area of the laminated stator core (1) are designed such that the radial cross-section is reduced towards the interior.

14. Low-inertia rotating electrical machines with a cooling system according to claims 1, 2, 5 to 8 and 13, wherein nozzle-shaped guide elements for the radial cooling ducts, which are connected to the inlet chambers (2), are provided in the area of the stator slot ends.

15. Low-inertia rotating electrical machines with a cooling system according to claims 1, 2, 5 to 8, and 13, in which funnel-shaped guide elements for the radial cooling ducts, which are connected to the outlet chambers (3), are provided in the area of the stator slot ends.

16. Low-inertia rotating electrical machines with a cooling system according to one of the preceding claims, in which filling compounds with good heat conducting properties are introduced in the slot area between the laminated core sections and the stator and rotor windings, or there is a metallic connection between the conductors (13) and the laminated rotor core sections (14), if bare conductors (13) are used.

17. Low-inertia rotating electrical machines with a cooling system according to one of the preceding claims, wherein the width of the radial cooling ducts in the laminated rotor core (6) is smaller or greater than the width of the radial cooling ducts of the laminated stator core (1).

18. Low-inertia rotating electrical machines with a cooling system according to claims 1, 2, 4 to 8, 13 to 15 and 17, wherein the axial cross-sections of the inlet chambers (2) and outlet chambers (3) are different.

19. Low-inertia rotating electrical machines with a cooling system according to claims 1, 2, 4 to 8, 13 to 15, 17 and 18, wherein axial fans are disposed at both ends of the inlet chambers (2) and the outlet chambers (3) are axially closed and their shell is provided with radial outlet openings on the side away from laminated stator core (1).

20. Low-inertia rotating electrical machines with a cooling system according to claims 1,2,4 to 8, 13 to 15, 17 and 18, in which an additional suction fan is provided if forced-draft ventilation is used.

21. Low-inertia rotating electrical machines with a cooling system according to claims 1, 2, 4 to 8, 13 to 15, 17 and 18, in which the outlet chambers (3) on the side away from the laminated stator core (1) are provided with additional radial outlet openings.

22. Low-inertia rotating electrical machines with a cooling system according to claims 1, 2, 4 to 8, 17 to 21, in which the inlet chambers (2) and outlet chambers (3) and the associated guide and spacer segments (4) are designed such that each ensuing radial cooling duct extends over several slot pitches.

23. Low-inertia rotating electrical machines with a cooling system according to claims 1, 2, 4 to 8, 13 to 15, 17 to 21, wherein the cross-sections of the inlet chambers (2) differ from those of the outlet chambers (3) and the associated guide and spacer segments (4) are designed such that the radial cooling ducts through which the air flows in extend over several slot pitches whose number is different from the number of radial cooling ducts through which the air flows off.

24. Low-inertia rotating electrical machines with a cooling system according to one of the preceding claims, in which the inlet ducts (2) and outlet ducts (3) are connected to an additional external heat exchanger.

25. Low-inertia rotating electrical machines with a cooling system according to claims 1, 9, 11 and 12, in which additional pressure-enhancing guide and spacer elements are arranged in the radial cooling ducts of the laminated rotor core (6).

## Revendications

1. Machine électrique tournante à faible inertie avec un système de refroidissement assuré par refroidissement autonome ou par ventilation forcée, conçue notamment pour des machines à courant alternatif dotées d'un paquet de tôles statoriques et d'un paquet de tôles rotoriques constitués chacun de paquets de tôles segmentés, le paquet de tôles statoriques (1) étant doté, le long de son diamètre extérieur, de chambres de flux d'amenée (2) et d'évacuation (3) axialement fermées d'un côté en alternance le long de la périphérie, et ayant une section axiale identique ou non identique,
comportant des éléments de guidage et d'écartement (4) au nombre des chambres d'amenée (2) et d'évacuation (3), disposés radialement dans la partie du dos du paquet de tôles statoriques (1) entre les paquets de tôles segmentés du stator (5), et comportant des entretoises (7) disposées entre les paquets de tôles segmentés du rotor (14),
le stator et le rotor comportant des conduits radiaux de refroidissement entre les paquets de tôles segmentés du stator (5) et les paquets de tôles segmentés du rotor (14),
les conduits de refroidissement du paquet de tôles statoriques (1) étant constitués par les éléments de guidage et d'écartement (4) et les embouts des paquets de tôles segmentés du stator (5), la longueur des paquets de tôles segmentés du stator (5) et des paquets de tôles segmentés du rotor (14) étant telle qu'un conduit radial de refroidissement du stator est disposé en regard d'un conduit radial de refroidissement du rotor,
que l'air de refroidissement est conduit à l'intérieur à travers les conduits radiaux de refroidissement en passant entre les paquets de tôles statoriques (1) et les paquets de tôles rotoriques (6) presque jusqu'à l'arbre du rotor (8),
que le flux axial issu des chambres d'amenée (2) est dirigé vers les chambres d'évacuation (3) des conduits radiaux de refroidissement du paquet de tôles statoriques (1) en passant radialement à travers le paquet de tôles statoriques (1),
et que l'air de refroidissement est conduit à l'extérieur radialement, en passant à travers les conduits de refroidissement du stator, pour arriver dans les chambres d'évacuation (3), et pour quitter la machine axialement.

2. Machine électrique tournante à faible inertie avec un système de refroidissement selon la revendication 1, comportant chaque fois une chambre d'amenée (2) ou plusieurs chambres d'amenée (2) juxtaposées dans la direction circonférentielle, suivie d'une chambre d'évacuation (3) ou plusieurs chambres d'évacuation (3) juxtaposées dans la direction circonférentielle.

3. Machine électrique tournante à faible inertie avec un système de refroidissement selon les revendications 1 et 2, comportant des entretoises (7) entre les paquets de tôles segmentés du rotor (14) qui s'étendent jusqu'à l'arbre du rotor (8).

4. Machine électrique tournante à faible inertie avec un système de refroidissement selon les revendications 1 à 3, les chambres d'amenée (2) et d'évacuation (3) étant montées dans un carter.

5. Machine électrique tournante à faible inertie avec un système de refroidissement selon les revendications 1 et 2, les chambres d'amenée (2) et d'évacuation (3) étant disposées dans le paquet de tôles statoriques (1) d'une machine sans carter et le paquet de tôles statoriques (1) étant terminé latéralement par bâti de compression (9).

6. Machine électrique tournante à faible inertie avec un système de refroidissement selon la revendication 5, la longueur des chambres d'amenée (2) et d'évacuation (3) dépassant la longueur des paquets de tôles et allant jusqu'au bout des bâtis de compression (9) et les bords de chambres étant dotés d'ouvertures radiales (10) dans la direction des têtes de bobinage (11).

7. Machine électrique tournante à faible inertie avec un système de refroidissement selon les revendications 5 et 6, les ouvertures radiales (10) disposées dans le bâti de compression (9) dans la direction des têtes de bobinage (11) étant positionnées du côté fermé des chambres d'amenée (2) et d'évacuation (3).

8. Machine électrique tournante à faible inertie avec un système de refroidissement selon les revendications 1, 2, 5, 6 et 7, les éléments de guidage et d'écartement (4) et les bords de chambres d'amenée (2) et d'évacuation (3) disposés dans les espaces entre les paquets de tôles segmentés du stator (5) étant constitués d'une ou de plusieurs pièces d'écartement en tôle estampée.

9. Machine électrique tournante à faible inertie avec un système de refroidissement selon la revendication 1, les conducteurs (13) du rotor étant moulés ou exécutés sous forme de cage simple ou double comportant des barres rondes ou des fils électriques isolés, et, dans le cas d'une cage double, une distance radiale existant entre les conducteurs (13) doubles.

10. Machine électrique tournante à faible inertie avec un système de refroidissement selon l'une des revendications précédentes, le refroidissement par ventilation forcée étant assuré par une unité de ventilation disposée latéralement dans la direction axiale ou radiale ou en haut dans la direction radiale.

11. Machine électrique tournante à faible inertie avec un système de refroidissement selon les revendications 1 et 9, le refroidissement autonome étant assuré par tourbillonneur monté sur l'anneau moulé de court-circuit de l'enroulement rotorique.

12. Machine électrique tournante à faible inertie avec un système de refroidissement selon les revendications 1 et 9, l'anneau de court-circuit de l'enroulement rotorique étant constitué d'éléments plats annulaires présentant entre eux un faible écart axial d'environ 1 mm.

13. Machine électrique tournante à faible inertie avec un système de refroidissement selon les revendications 1, 2 et 5 à 8, les éléments de guidage et d'écartement (4) disposés dans l'espace entre les paquets de tôles segmentés du stator (5) dans la partie du dos du paquet de tôles statoriques (1) étant exécutés de telle manière que leur section radiale se diminue vers l'intérieur.

14. Machine électrique tournante à faible inertie avec un système de refroidissement selon les revendications 1, 2, 5 à 8 et 13, comportant des éléments de guidage en forme de tuyère dans la partie de la tête des encoches statoriques, et faisant fonction de conduits radiaux de refroidissement liés aux chambres d'amenée (2).

15. Machine électrique tournante à faible inertie avec un système de refroidissement selon les revendications 1, 2, 5 à 8 et 13, comportant des éléments de guidage en forme d'entonnoir dans la partie de la tête des encoches statoriques, et faisant fonction de conduits radiaux de refroidissement liés aux chambres d'évacuation (3).

16. Machine électrique tournante à faible inertie avec un système de refroidissement selon l'une des revendications précédentes, comportant des matériaux de remplissage à bonne conductivité thermique entre les paquets de tôles segmentés et l'enroulement statorique et rotorique dans la partie des encoches ou le paquet de tôles rotoriques (6) comportant, en cas d'utilisation de conducteurs nus (13), une connexion métallique entre les conducteurs (13) et les paquets de tôles segmentés du rotor (14).

17. Machine électrique tournante à faible inertie avec un système de refroidissement selon l'une des revendications précédentes, la largeur des conduits radiaux de refroidissement du paquet de tôles rotoriques (6) étant plus ou moins importante que la largeur des conduits radiaux de refroidissement du paquet de tôles statoriques (1).

18. Machine électrique tournante à faible inertie avec un système de refroidissement selon les revendications 1, 2, 4 à 8, 13 à 15 et 17, la section axiale des chambres d'amenée (2) et d'évacuation (3) étant différente.

19. Machine électrique tournante à faible inertie avec un système de refroidissement selon les revendications 1,2,4 à 8, 13 à 15, 17 et 18, les chambres d'amenée (2) comportant axialement des ventilateurs des deux côtés et les chambres d'évacuation (3) étant axialement fermées et comportant des ouvertures radiales d'évacuation disposées du côté opposé au paquet de tôles statoriques (1).

20. Machine électrique tournante à faible inertie avec un système de refroidissement selon les revendications 1,2,4 à 8,13 à 15, 17 et 18, comportant un ventilateur supplémentaire aspirant placé sur les chambres d'évacuation (3) en cas de ventilation forcée.

21. Machine électrique tournante à faible inertie avec un système de refroidissement selon les revendications 1, 2, 4 à 8, 13 à 15, 17 et 18, les chambres d'évacuation (3) comportant des ouvertures radiales supplémentaires d'évacuation du côté opposé au paquet de tôles statoriques (1).

22. Machine électrique tournante à faible inertie avec un système de refroidissement selon les revendications 1, 2, 4 à 8, 17 à 21, les chambres d'amenée (2) et d'évacuation (3) et les éléments correspondants de guidage et d'écartement (4) étant constitués de telle manière que chaque conduit radial de refroidissement s'étend sur plusieurs séries d'encoches.

23. Machine électrique tournante à faible inertie avec un système de refroidissement selon les revendications 1, 2, 4 à 8, 13 à 15, 17 à 21, la section des chambres d'amenée (2) et des chambres d'évacuation (3) étant différente et les éléments correspondants de guidage et d'écartement (4) étant exécutés de telle manière que les conduits radiaux de refroidissement qui assurent l'amenée du flux d'air, s'étendent sur un autre nombre de plusieurs séries d'encoches que les conduits radiaux de refroidissement qui assurent l'évacuation du flux d'air.

24. Machine électrique tournante à faible inertie avec un système de refroidissement selon l'une des revendications précédentes, les canaux d'amenée (2) et d'évacuation (3) étant liés à un échangeur thermique supplémentaire monté à l'extérieur.

25. Machine électrique tournante à faible inertie avec un système de refroidissement selon les revendications 1, 9, 11 et 12, les conduits radiaux de refroidissement du paquet de tôles rotoriques (6) comportant en supplément des éléments de guidage et d'écartement qui augmentent la pression.
